Europäisches Patentamt

European Patent Office

Office européen des brevets

(19)

(11) EP 0 850 755 A1

(12) EUROPEAN PATENT APPLICATION

(43) Date of publication:
01.07.1998 Bulletin 1998/27

(51) Int. Cl.$^6$: B32B 27/08, E01F 9/04

(21) Application number: 96203681.0

(22) Date of filing: 23.12.1996

(84) Designated Contracting States:
DE FR GB
Designated Extension States:
AL LT LV RO SI

(71) Applicant:
MINNESOTA MINING AND MANUFACTURING
COMPANY
St. Paul, Minnesota 55133-3427 (US)

(72) Inventor:
Goeb, Siegfried Rainer,
c/o 3M Laboratories GmbH
41453 Neuss (DE)

(74) Representative:
Hill, Cecilia Ann et al
3M Europe,
Hermeslaan 7
B-1831 Diegem (BE)

(54) Conformable marker sheet

(57) The present application relates to a conformable marker sheet 200 inlcuding a conformance layer 1may comprise a composition including a ductile thermoplastic polyolefin of low crystallinity and segments of an amorphous polyolefin. The segments may be polymerised with the ductile thermoplastic polyolefin to form an amorphous ductile thermoplastic polyolefin. Alternatively, the segments may be polymerised to form an amorphous thermoplastic polyolefin additive. A composition in accordance with the invention includes the amorphous thermoplastic polyolefin additive and a ductile thermoplastic polyolefin base polymer.

Fig. 2.

Printed by Xerox (UK) Business Services
2.16.3/3.4

EP 0 850 755 A1

## Description

### 1. Field of the Invention

The present invention relates to the field of articles, in particular to durable conformable marker sheets which may include a graphics image and may be applied to a pavement or roadway, warehouse floor, and the like for direction indicating, delineation or other marking purposes. In the following the word "pavement" will be used as customarily understood in USA. Such articles will be referred to as pavement markings, and in particular to pavement marking tapes. The present invention also relates to less durable conformable marker sheets which may be used on floors and may contain an image suitable for floor graphics.

Conventional conformable pavement marking sheet materials typically comprise a polymeric material, such as one that could be cross-linked to form an elastomer, but which is not cross-linked in the sheet material and thereby provides desired viscoelastic properties. A blend of this type of material with other polymeric materials and inorganic fillers has been found to provide properties that give long-lasting pavement markings having good conformability to a roadway surface, abrasion resistance, tensile and tear strength. The marking sheet may have glass beads embedded in its upper surface for retroreflective purposes. An example of this type of pavement marking is disclosed in U.S. Pat. No. 4,490,432. Briefly, these advantages can be obtained with a composition that comprises 100 parts of non-cross-linked elastomer binder precursor; at least 5 parts of a thermoplastic reinforcing polymer (such as a polyolefin) which is dispersed in the elastomer as a separate phase (i.e., because of insolubility or immiscibility with the other polymeric ingredients) and softens at a temperature between about 75°C and 200°C; a particulate inorganic filler dispersed in the composition; and preferably an extender resin, such as a halogenated paraffin. This composition is processable on calendering rolls into a thin sheet material, generally between about 1/4 and 3 millimeters in thickness. The separate-phase nature of the reinforcing polymer is considered desirable, in that it is believed that the polymer becomes oriented during the calendering operation and reinforces the sheet material. Such a reinforcement is indicated by the fact that the tensile strength of the sheet material is significantly stronger in the downweb direction (i.e. in the direction of calendering) than in the crossweb, or transverse, direction.

U.S. Pat. No. 5,316,406 discloses a roadway marker rubber-like strip in which the upper layer is deformed into protuberances such as wedges or ridges, preferably provided with a coating of exposed retroreflective beads, that have been cross-link-vulcanized to provide the strip with "shape memory" that permits shape restoration following depression by vehicle traffic, and a cold-flow un-vulcanized bottom layer adhered to the roadway and conforming without shape memory to the same under vehicle traffic.

Other conformable pavement markings are disclosed in U.S. Pat. No. 4,069,281 (Eigenmann), U.S. Patent No. 5,422,162 (which discloses a conformable layer comprising a saturated acrylonitrile butadiene elastomer grafted with a zinc salt of methacrylic acid), and U.S. Serial No. 08/056,420 (filed May 3, 1993), which discloses a conformable butadiene layer and at least one resin selected from the group consisting of hydrogenated polycyclodiene resins and aliphatic hydrocarbon resins.

Another approach to pavement markings has recognized that conformability of the pavement marking to the pavement may be enhanced by utilizing a conformance layer onto which is placed retroreflective elements, either by embedding or by use of a binder or top layer. In one article, described in U.S. Pat. No. 5,194,113, the conformance layer comprises a ductile thermoplastic polymer (preferably a polyolefin) and a non-reinforcing mineral particulate. Another article, described in U.S. Pat. No. 5,120 154, employs a base layer comprising a microporous thermoplastic polymer characterized by exhibiting certain inelastic deformation/conformability properties.

These conventional conformable tapes based on thermoplastic polymers can have certain disadvantages. In order to obtain adequately "dead" tapes, it is usually necessary to sacrifice some other properties, such as tear strength, elongation or tensile strength. To avoid the pavement marking tape being too stiff and therefore not easily easily deformable, the thickness of the thermoplastic layer is often reduced which may result in reduced durability.

### 2. Summary of the invention

The present invention may include a conformable marking sheet having a conformance layer, said conformance layer comprising: a composition including at least 10% by weight of an amorphous thermoplastic polyolefin.

The present invention may also include a conformable marking sheet having a conformance layer, said conformance layer comprising: a composition including a ductile thermoplastic polyolefin of low crystallinity and segments of an amorphous polyolefin.

The composition may comprise a ductile thermoplastic polyolefin polymerised with segments of an amorphous thermoplastic polyolefin rubber. Preferably, the crystallinity of said composition is less than 25% and preferably less than 18%, and most preferably 15% or less. The ductile thermoplastic polyolefin is preferably chosen from the group including polyethylene, polypropylene and copolymers of these materials as well as co- or terpolymer poly-$\alpha$-olefins

and homoplymer/copolymer/terpolymer mixtures.

The amorphous polyolefin segments may be polymerised into an amorphous plastomer which is included as an additive. In particular, the amorphous ductile polyolefin additive may be thermoplastic and be polymerised from at least one $\alpha$-olefin monomer and has a melt viscosity at 190° C in the range 500 to 200,000 mPas. Said conformance layer may also include a ductile thermoplastic base polymer with a melt viscosity at 190° C of at least 1,000,000 mPas, and said amorphous ductile thermoplastic polyolefin additive is preferably mechanically compatible with said ductile thermoplastic polyolefin base polymer, i.e. it blends well and smoothly and does not form separate phases. The amorphous ductile thermoplastic polyolefin additive preferably has a crystallinity of less than 25% and preferably less than 18%, and most preferably 15% or less.

The ductile thermoplastic polyolefin base polymer may also be chosen from the group of polyethylene, polypropylene and copolymers of these materials as well as co- or terpolymer poly-$\alpha$-olefins and homopolymer/copolymer/terpolymer mixtures

The present invention also includes a stretch release conformable marking sheet, preferably with an extension to break of 350% or more, preferably 500% or more. The present invention also includes a method of removing a pavement marking sheet fixed to a pavement by means of an adhesive including the steps of extending the sheet in a longitudinal direction to release said pavement marking sheet by a stretch release mechanism.

The present invention also includes a manufacture process for making a conformable marking sheet having a conformance layer, comprising the steps of: providing a composition including a ductile thermoplastic polyolefin and segments of an amorphous polyolefin or a composition including at least 10% by weight of an amorphous thermoplastic polyolefin,

forming said composition into a sheet, and

bonding said sheet to a support layer.

The conformable articles of the present invention, and systems into which they are incorporated, exhibit a number of advantages over previous approaches. Excellent conformability and environmental stability is obtained, e.g. weathering, UV resistance, water and oil stability, and durability is equivalent to, or improved over that of existing pavement marking tapes, which have already been proven in the field.

The particular advantage of the conformance layer in accordance with the present invention is that it provides a combination of high conformability, good tear strength, high extension to break, low yield strength and a high tensile strength at break. This combination of properties is unexpected. The marking sheet including the conformace layer according to the present invention may be durable. The word "durable" in the present application means suitable for use in a pavement marking environment with traffic load. Further, the conformance layer in accordance with the present invention can be extruded using high speed large volume extruders which reduces manufacturing costs compared to using rubber calenders.

The articles of the invention may either be placed on the surface of the roadway, or placed in a trench in the roadway. In the latter embodiment, if the surface is a "fresh" (i.e. still warm) asphalt surface the articles of the invention may be placed initially on top of the fresh asphalt or uncured concrete and thereafter pushed down substantially flush with the surface using any suitable means such as a roller. In such an application, the requirements for conformability are reduced and the possible candidates for the conformance layer of the marking sheet are increased in number as the technical requirements are reduced. With such materials the present invention retains the advantage of low maunfacturing cost.

The dependent claims define further embodiments of the invention.

The invention, its embodiments and advantages will now be described with reference to the following drawings.

## Brief Description of the drawings

Fig. 1 shows a schematic cross-section through a conformable sheeting in accordance with the present invention.
Fig. 2 shows another schematic cross-section through a conformable sheeting in accordance with the present invention.
Fig. 3 shows a further schematic cross-section through a conformable sheeting in accordance with the present invention.
Fig. 4 shows still another schematic cross-section through a conformable sheeting in accordance with the present invention.

## Description of the Illustrative Embodiments

## Test Methods

Each of the test methods employed was performed using a tensile tester, according to DIN 51221.

1) Permanent set

Film samples were extruded and allowed to rest at ambient conditions for one week before testing.

Samples 150 mm x 25.4 mm film of 0.3 - 0.7 mm were cut from a sheet of extruded polymer. Samples were cut with one of two different orientations. Either the longer side of the sample was parallel to the extrusion direction or the longer side was parallel to the cross direction with respect to the extrusion direction and labeled accordingly as MD (machine direction) and CD (crossweb direction), respectively. The thickness of the film samples was measured with an electronic caliper gauge and recorded.

The samples were then conditioned for 24 hrs at 50% relative humidity and 23°C. before testing.

Film samples were clamped in the jaws of a tensile tester with the jaws at a distance of 100 mm. The point where the jaws first meet the film samples was marked with a pen. The jaws were then separated at a speed of 300 mm/min.

Film samples were stretched in the tensile tester so that the distance between the marks was 120% or 150%, respectively, as compared to the original distance between the marks. The samples were then held at this final elongation for a period of about 3 minutes The exact hold time for the 120% elongation was 184 sec and the hold time for 150% elongation was 190 sec.

Film samples were then allowed to relax for 15 minutes. Then the distance between the marks was re-measured using a calibrated ruler. The per cent permanent set was calculated as: (final length - original length)/ (distance stretched) x 100 = % permanent set.

Example: If a 100 mm sample was stretched to 120 mm and recovered to 110 mm, then the % permanent set is 50 %.

Three samples were measured and the results averaged.

2) Tensile and elongation

a) Elongation at break

Elongation at break was determined according to DIN 53455 / ISO 527. Samples were prepared in an identical fashion to those used above in the permanent set test (150 mm x 25.4 mm x 0.3-0.7 mm) and were conditioned as above.

The jaws of the tensile tester were moved apart at a rate of 100 mm/min and a standard stress-strain recorded. The % elongation at the point of breakage was read from the x-axis of the curve.

b) Yield point stress

Film samples were stretched at a rate of 100 mm/min. The % elongation vs. the force required to produce that elongation was recorded in the form of a standard stress-strain curve. The point $F_S$ was taken from the graph according to the method DIN 53455 / ISO 527, stress at the yield point.

c) Deforming stress for 15% elongation

The force required to produce 15% elongation was taken from the same stress-strain curve described above and recorded.

3) Tear resistance

The tear resistance test was performed according to DIN 53356 or ASTM 1004. Samples of film having the dimensions of 100 mm x 50 mm. were cut from the extruded film in both the machine direction (MD) and crossweb (CD) directions, respectively. The film thickness varied between 0.3 mm and 0.7 mm. Film thickness was measured and used in calculation.

A 50 mm cut was made in the edge of the film along the length of samples as described in the test method. The two partially connected strips produced by the cut were gripped in the jaws of the tensile tester and pulled in opposite directions at a crosshead speed of 100 mm / min.

The force required to tear the film in a manner representing an extension of the cut was recorded in N. This force was divided by the film thickness to provide a measurement in N/mm. Each film material was evaluated three times and an average value calculated.

## Conformable Article Embodiments

The articles of the invention may comprise a series of layers, with each layer having a separate function, but it should be understood that this is not necessarily the most preferred configuration. All layers other than the first conformance layer are optional. From top to bottom, the layers of an article within the invention having multiple layers, each having a separate function, are as follows:

(i) Support or Appearance/Durability/Traction Layer. This optional layer is chosen to give the articles the desired appearance, such as a highly visible traffic lane marking, and to have sufficient durability to protect the layers beneath it. It may also provide a surface texture that improves the traction of tires in contact with the layer and may reduce skidding. It may also provide a surface texture that reduces the shear force on the tape when subjected to tire traction. This layer may be continuous or discontinuous across the traffic-bearing surface of the article. In accordance with the present invention any suitable support layer may be used.

(ii) First Conformance Layer. This layer is characterized by a high degree of conformance to the underlying roadway and high ratio of viscous damping to elasticity. Such a layer promotes and contributes to enhanced adhesion of the inventive article to the underlying pavement in response to repeatedly being driven over. The conformance layer may also comprise two sub-layers, an upper elastic layer and a lower non-elastic cold-flow layer, such as disclosed in U.S. Pat. No. 5,316,406. Alternatively or additionally the two sub-layers may include a pigment in the top sub-layer and no or an alternative pigment in the bottom sub-layer. Such a construction uses less pigment and may reduce material costs.

(iii) Second Conformance Layer. This optional layer may be a malleable metal layer and may be bonded to the first conformance layer. Suitable malleable metals should exhibit a "dead soft" characteristic and may be metals such as lead, aluminium, copper, silver or gold. Dead soft aluminium is preferred as it is reasonably cheap, is environmentally acceptable and has been used in pavement markings before.

(iv) Reinforcing layer. This optional layer may include woven or non-woven textile reinforcements such as non-woven polyester spunbonded polyester or polypropylene scrims as produced, for example, by Reemay Inc., Old Hickory, Tennesee, USA. In accordance with the present invention any suitable reiforcing layer may be used. However, a reinforcing layer may reduce the extensibility of a marker sheet considerably and thus limit the performance of the conformance layer in accordance with the present invention.

(v) Adhesive Layer. This optional layer, which may be a chemical adhesive (such a pressure-sensitive, heat-sensitive, hot-melt thermoplastic, or contact adhesive) or a mechanical adhesive (such as a pair of intermeshing sheetings, one of which is adhered to the roadway, the other to the underside of the article) and allows attachment the article to the roadway. In accordance with the present invention any suitable adhesive layer may be used. Alternatively, this layer may be absent and the marking sheet secured to the pavement surface by nails, studs, staples or similar mechanical fastenung means.

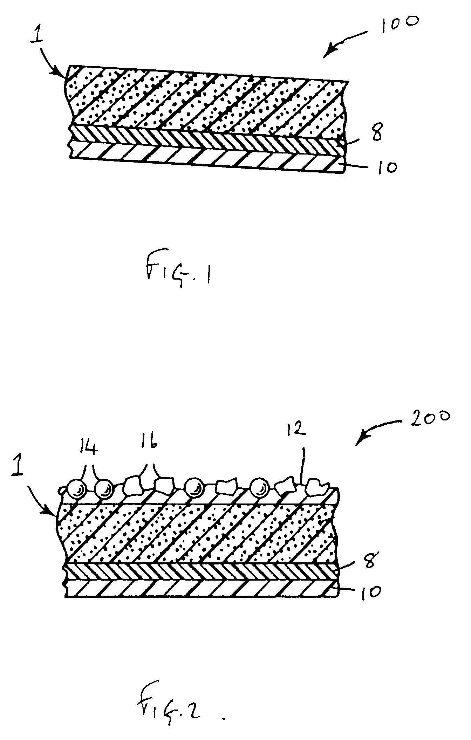

Figs. 1 to 4 illustrate schematic cross-sectional views (enlarged) of nonlimiting embodiments of conformable articles in accordance with the present invention. Fig. 1 illustrates conformable article 100, comprising a polymeric conformance layer 1 in accordance with the present invention and an adhesive layer 8 on the lower major surface of the article. If an adhesive layer 8 is not used, article 100 may be fastened to the roadway by other means, such as mechanical clamps, plastic nails, or other fasteners such as the interlocking articles described in U.S. Pat. No. 5,344,177, incorporated herein by reference. The conformable article 100 of Fig. 1 may have a release liner layer 10 temporarily adhered to adhesive layer 8.

Fig. 2 represents an alternative pavement marking tape within the invention, again showing a conformance layer 1 in accordance with the present invention, an adhesive layer 8 and a release liner 10. Embodiment 200 of Fig. 2 also illustrates a support layer 12, including a retroreflective and anti-skid layer comprising a vinyl, epoxy, acidic olefin copolymer, polyamide, polyurea, polyester or polyurethane layer which serves to adhere transparent microspheres 14 and irregularly shaped skid-resistant particles 16 to the first conformance layer 1. Thermosetting polymers are preferred for support layer 12 because such materials will not deform under extreme temperature and pressure conditions and are thus more durable. In the illustrated embodiment 200, transparent microspheres 14 serve as retroreflective elements. The construction of embodiment 200 is generally that described in U.S. Pat. Nos. 4,117,192 and 5,194,113, except for the presence of the conformance layer 1 in accordance with the present invention. As described in the '192 patent, support layer 12 is less thick but generally less inelastic than first conformance layer 1. The support layer 12 supports the microspheres at the top of the article. In exemplary embodiments the thickness of conformance layer 1 is at least about 0.15 millimeter, more preferably at least about 0.5 millimeter, but preferably less than 3 millimeters.

Support layer 12 adhered to first conformance layer 1 may be more elastic than first conformance layer 1, meaning that upon application and then release of deforming stress, it will return more closely to its original shape than conformance layer 1. The result is that when microspheres are pressed at normal room temperature into a sample of support layer 12 laid on a hard unyielding surface with a pressure that would embed microspheres into first conformance layer 1, the microspheres do not become embedded but remain on the surface of support layer 12 after the pressure has been released. In addition, support layer 12 has good adhesion to retroreflective elements or other particulate matter to be embedded in it, which assists in holding such particles against penetration into the first conformance layer 1. Urethanes and vinyl-based polymers (polymers that include at least 50 weight percent polymerized vinyl monomer units) are particularly suitable materials for layer 12 because of their toughness, abrasion resistance, and durability in a highway environment. Support layers 12 based on vinyl polymers are typically plasticized to provide desired flexibility.

Preferably layer 12 is between 60 and 2000 microns thick. Support layer 12 may be applied to conformance layer 1 by a variety of methods. Support layer 12 may be a continuous or a discontinuous layer. Support layer 12 may be coextruded with conformance layer 1. Alternatively, support layer 12 may be applied by any suitable lamination, coating or printing technique including hot lamination, adhesive lamination, hot melt coating, solvent coating, spraying, and screen printing. Such techniques may produce a continuous, a patterned or discontinuous support layer 12. Non-limiting examples of suitable coating methods are disclosed in US patent applications with the serial numbers 08/247017 and 08/562041 both of which are incorporated herein by reference, e.g. pattern coating using a rotary screen or clam-shell die, or by screen printing.

Where layer 12 is die coated the thickness is preferably in the range 500 to 1500 microns. Support layer 12 may consist of a plurality of polymeric segments applied from a die head which oscillates perpendicular to the drection of movement of the base sheet. the polymeric segments may be made of polyurethenes, epoxy resins, polyamides, polureas or polyesters. Thermosetting polymers are preferred. Inorganic additives may be included. Support layer 12 may be applied by means of a rotary screen die or clam-shell die. Alternatively, support layer 12 may be formed separately and then bonded to conformance layer 1. Further details of discontinuous die coating may be found in US patent application, Serial No. 08/247017 (except for the inventive concepts herein).

Where the layer 12 is screen printed the thickness is preferably between 60 and 300 microns, more preferably between 70 to 150 microns. Preferably the support layer 12 is a polymeric layer comprising a blocked polyisocyanate crosslinker. Illustrative examples of suitable blocked polyisocyanates may be selected from the oxime class or from the maleic ester class of blocked polyisocyanates. The composition of support layer 12 may comprise a polymer comprising components A, B and C wherein component A, as hard segment portion, has a $T_g$ of 30°C to 100°C, and comprises a copolymer of:

(i) a monoester of acrylic or methacrylic acid and an aliphatic diol having 2 to 8 carbon atoms, and
(ii) an ester of acrylic or methacrylic acid and an aliphatic alcohol having 1 to 8 carbon atoms, and optionally a vinyl aromatic monomer as well as N-vinylpyrrolidone or N-vinylcaprolactam, alternatively, component A may also comprise a hydroxy functional polyesterpolyol with a functionality of 3 or more hydroxyl groups per molecule;

component B, as soft segment portion, comprises an aliphatic polyester polyol with a weight-average molecular weight less than 20,000 and a hydroxy functionality of between 2 and 3; and
component C comprises a blocked polyfunctional isocyanate. The remaining compositional details of such a support layer (except for the inventive concepts herein) are described in US patent application Serial No. 08/562041.

During subsequent curing of the coating composition at elevated temperatures, the isocyanate groups unblock. The blocking agent is released and the polyisocyanates react to form a high molecular weight polymer. The un-blocking reaction typically occurs at between approximately 100°C and 180°C. The temperature depends on the particular diisocyanate and particular blocking moiety selected.

Other particulate matter which may be introduced into support layer 12 may be chosen from pigments such as titanium dioxide (white) or lead chromate (yellow), aluminium flakes, nacreous pigment flakes and white aluminum oxide granules, organic colorants inlcuding pigments and dyes as well as fillers such as alumina, magnesium silicate, magnesium oxide, calcium carbonate, calcium meta silicates, amorphous or crystalline silica, zinc oxide or zirconium oxide.

The microspheres and particulate matter 14, 16 may be treated with a coupling agent that improves adhesion between the particles 14, 16 and the support layer 12. Preferred agents are silane compounds, such as aminosilane compounds. The particles 14, 16 may also be treated with a surface energy modifying agent to decrease their surface energy during curing of the support layer 12. Preferred surface energy modifying agents are fluorocarbons.

Support layer 12 may or may not be pigmented to provide color to the article, and the first conformance layer 1 is typically pigmented the same color to provide continuity of color after the support layer has eventually been removed by traffic abrasion. Other aspects of embodiment 200 of Fig. 2 are generally described in US Patent No. 4 117 192 except for the conformance layer 1 in accordance with the present invention.

Fig. 3 illustrates an enlarged cross-sectional view of embodiment 300, which is an alternative pavement marking embodiment within the invention. Microspheres 14, 14a, 14b having a refractive index of about 1.5 to 2.0 are shown embedded (about 20 to 80%) in the top of protuberances 24 in a support layer 12 on a conformance layer 1 in accordance with the present invention. Microshperes 14a on the sides of the protuberances 24 are also partly embedded. The microspheres 14b are fully embedded in the support layer 12 in the valleys between protuberances 24. Such an article is generally described in U.S. Pat. No. 4,388,359 (except for the inventive features herein) which is incorporated herein by reference. The protuberances 24 may be produced by extruding support layer 12 onto a structered cooling roller, whereby the structure in the roller forms the protuberances 24. Alternatively, support layer 12 may be extruded as a sheet and cooled in the conventional manner. Subsequently, the sheet may be re-heated and embossed to form protuberances 24.

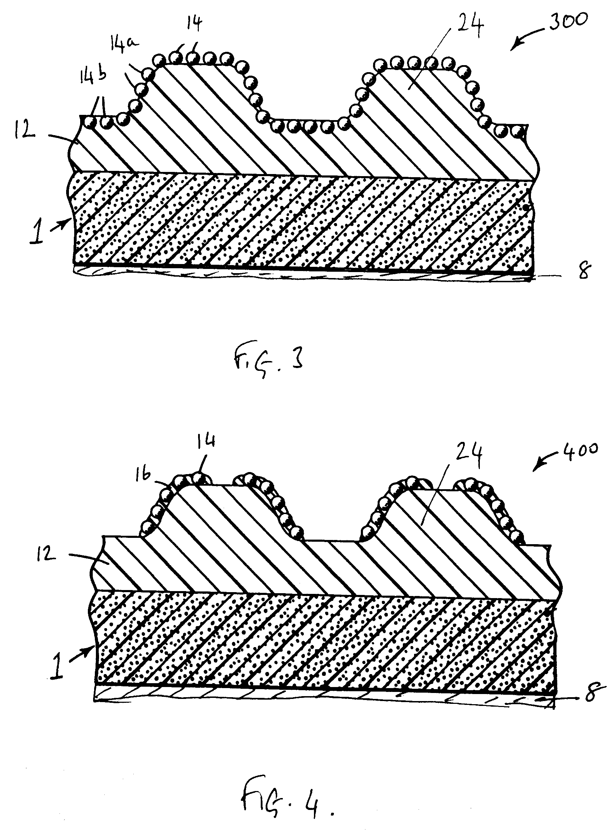

Fig. 4 illustrates embodiment 400 which is similar to embodiment 300 of Fig. 3, except that the reflective beads 14 are adhered only on the side surfaces and a small portion of the top surfaces of the protuberances 24 using an organic binder 16, such as thermoplastic or thermo-setting "bead-bond" material. One such binder is a vinyl based thermoplastic resin including a white pigment, as described in U.S. Pat. No. 4,117,192, incorporated herein by reference. Other suitable bead-bond materials include two-part polyurethanes formed by reacting polycaprolactone diols and triols with derivatives of hexamethylene diisocyanate; epoxy based resins described in U.S. Pat. Nos. 4,248,932; 3,436,359; and 3,580,887; and blocked polyurethane compositions as described in U.S. Pat. No. 4,530,859. Also suitable bead-bond materials are polyurethane compositions comprised of a moisture-activated curing agent and a polyisocyanate prepolymer. The moisture-activated curing agent is preferably an oxazolidine ring. Such compositions are described in U.S. Pat. No. 4,381,388, incorporated herein by reference.

The construction details of article 400 are further explained (except for the inventive features herein) in US Patent Nos. 4 988 555 and 4 988 541, both incorporated herein by reference.

## Adhesives

In accordance with the present invention any suitable adhesive may be used. The adhesive layer 8 on the bottom of sheet material of the invention may be a pressure-sensitive adhesive (PSA) such that the sheet material may be pressed against a roadway and removably adhered thereto, although many types of adhesives may be employed, both chemical and mechanical. PSAs are typically and preferably aggressively and permanently tacky at room temperature, adhere to substrates without the need for more than hand pressure, and require no activation by water, solvent or heat. The adhesive layer 8 should provide at least 0.2 kilogram adhesion per centimeter width, and preferably at least 0.5 kilogram adhesion per centimeter width, in a 180° peel test such as described in ASTM D1000, paragraphs 36 - 38. A steel panel is used in this test as a standard panel to which adhesion is measured. Suitable pressure-sensitive adhesives include rubber-resin adhesives as taught in Freeman, U.S. Pat. No. 3,451,537, and acrylate copolymers as taught in Ulrich, U.S. Pat. No. Re. 24,906. Layer 8 is preferably from about 0.038 cm to about 0.051 cm (5 to 20 mils) thick.

The present invention also includes a stretch release pavement marking tape. Suitable adhesives may be those described in WO 92/11333 which is incorporated herein by reference.

## First Conformance layer 1

The first conformance layer 1 in accordance with a first embodiment of the present invention includes a ductile, preferably malleable, amorphous thermoplastic polyolefin as the major component of the layer. The amorphous polyolefin may include at least one alpha olefin monomer in the polymerisation of the polyolefin. Amorphous thermoplastic polyolefins suitable for use in the first conformance layer 1 include polyethylene, polypropylene and copolymers of these materials as well as co- or terpolymer poly-$\alpha$-olefins and homoplymer/copolymer/terpolymer mixtures. Polypropylene/ethylene copolymers are preferred, particularly those which are described as "rubber modified". It is preferred in accordance with the present invention if the rubber modification of the thermoplastic polyolefin does not include diene groups as these tend to introduce a too high elastomeric characteristic to the final polymer. A suitable rubber modification is the inclusion of segments of an amorphous thermoplastic polyolefin in the polymerisation of a ductile thermoplastic polyolefin. For example, ethylene propylene rubber (EPM rubber) segments may be included during the polymerisation of a ethylene propylene thermoplastic copolymer.

Thermoplastic materials as of their nature tend to have a more or less well defined melt temperature which is indicative of a change from a crystalline to an amorphous state. Conventional thermoplastic polymer materials generally do not have the correct balance of properties required to form a conformance layer 1 without significant additives or modification. They tend to have a too high force at 15% deformation, i.e. they demonstrate undesirable tensile properties linked closely to their crystallinity. To maximize conformability, preferred amorphous polyolefins in accordance with the present invention are a small sub-class of polyolefins which advantageously have very low crystallinity. The density of a polymer is indicative of the crystallinity in the bulk polymer. For ethylene copolymers with comonomers other than $\alpha$-olefins (e.g., ethylene-vinyl acetate or ethylene-acrylic acid copolymers) a polymer of a given crystallinity would have a different density than the polyethylene of the same crystallinity. Therefore, when selecting or predicting suitability of such polymers, it is more appropriate to consider their crystallinities rather than their densities. Suitable ductile amorphous thermoplastics in accordance with the first embodiment of the present invention are expected to include polyolefins having a crystallinity not greater than about 25% and more preferably not greater than 18%, and most preferably 15% or less. Advantageously, the thermoplastic amorphous polyolefin may be polymerized with controlled stereospecificity to reduce crystallinity or may be modified by block, random or grafted copolymerisation with a suitable monomer.

On the other hand elastomeric materials tend to have lower tensile properties than thermoplastic polymers but have a high resilience, i.e. they may be extended and return substantially to the original length. In accordance with the present invention a thermoplastic polymer is mixed with or polymerised with an amorphous polymer to obtain properties which lie between those of a thermoplastic and an elastomeric material. The lower limit of crystallinity for the composition in accordance with the first embodiment may be given by materials which show rubber-like elastic properties, i.e. materials with which the permanent set after 20% or 50% extension becomes unacceptably high. In accordance with the present invention the lower limit of crystallinity may be 5%. Preferably, the melt flow index (MFI) of the amorphous polyolefin should be less than about 20 g/10 minutes as measured by the method in accordance with ASTM D1238. The melt viscosity is preferably greater than 1,000 Pas (Pascal seconds) at 190° C.

A preferred non-limiting example of an amorphous polyolefin in accordance with a first embodiment of the present invention is a modified propylene/ethylene copolymer, melt flow index (MFI) (230°C/2.16 kg): 0.6 g/10 min, available as HIFAX CA 10 A, from Montell Bayreuth GmbH, Eschborn, Germany which has a crystallinity of about 10 to 12%.

The conformance layer 1 in accordance with a second embodiment of the present invention may include a ductile thermoplastic polyolefin base polymer and an amorphous thermoplastic polyolefin additive. The ductile thermoplastic polyolefin base polymer is preferably in the range 50 to 90% by weight and the amorphous polyolefin additive in the range 10 to 50% by weight. The composition may include a non-reinforcing mineral particulate filler in the range up to 50% by weight.

The requirements on crystallinity for the ductile thermoplastic base polymer may be less than for the amorphous polyolefin of the first embodiment. Suitable ductile thermoplastics base polymers are expected to include thermoplastics having a crystallinity not greater than about 60%, preferably less than 25% and most preferably less than 18% when measured by Differential Scanning Calorimetry (DSC) using, for instance, a DSC-2 differential scanning calorimeter available from Perkin-Elmer Corporation, Norwalk, Conn., USA, with ice-water bath cooling and nitrogen atmospheric control.

Thermoplastic polyolefins base polymers suitable for use in the conformance layer 1 include polyethylene, polypropylene and copolymers of these materials as well as co- or terpolymer poly-$\alpha$-olefins and homoplymer/copolymer/terpolymer mixtures.

Polypropylene/ethylene co-polymers are preferred, particularly those which are described as "rubber modified". It is preferred in accordance with the present invention if the rubber modification of the thermoplastic polyolefin does not include diene groups as these tend to introduce a too high elastomeric characteristic to the final polymer. A suitable rubber modification is the inclusion of segments of polyolefin rubber, e.g. ethylene propylene rubber (EPM rubber), during the polymerisation of thermoplastic polyolefin, e.g. ethylene propylene thermoplastic copolymer. The ductile thermoplastic polyolefin base polymer may be a polyethylene or a linear polyethylene copolymer prepared in part from propylene, butene, hexene, or octene monomer. The melt index of suitable polymers is preferably not more than 300 g/10 minutes by ASTM method 1238-79. Preferably, the melt index of the ductile thermoplastic base polymer of the composite material should be less than about 20 g/10 minutes as measured by the method in accordance with ASTM D1238. The melt viscosity is preferably greater than 1,000 Pa.s at 190° C.

Further suitable, non-limiting examples of thermoplastic polyolefins base polymers are: polypropylene homopolymer, melt flow index (MFI) (230°C/2.16 kg): 12 g/10 min, available as Finapro PPH 7060S; polypropylene homopolymer, melt flow index (MFI) (230°C/2.16 kg): 12 g/10 min, available as Finapro PPH 7600; polyethylene homopolymer MFI(190°C/2.16 kg): 3 g/min, available as Finathene LDPE From Fina Chemicals, Brussels, Belgium; ethylene/octene copolymer MFI(190°C/2.16 kg): 0,7 g/10 min, available as Dowlex NG 5055 E from Dow Plastics, Duesseldorf, Germany; ethylene/octene copolymer produced using single „side" metallocene catalysts MFI (190°C/2,16 kg): 1g/ 10 min, available as Engage 8480, from DuPont Dow Elastomers, Bad Homburg, Germany.

Advantageously, the thermoplastic polyolefin base polymer may also be polymerized with controlled stereospecificity to reduce crystallinity or may be modified by block, random or grafted copolymerisation with a suitable monomer. For instance, the polyethylene may be an ultra low density polyethylene (ULDPE). Ultra low density polyethylene means linear ethylene copolymers with densities of not greater than 0.915g/cm$^3$. ULDPE formed as an ethylene-octene copolymer with from about 3 - 8 mole percent octene may be used and about 5 mole percent octene, is particularly preferred. For example, Attane 4001 brand ULDPE; Attane 4002 brand ULDPE; and Attane 4004 brand ULDPE, available from the Dow Chemical Company of Midland, Mich. are suitable components. Densities of such polyethylenes are in the range of about 0.880 - 0.915 g/m$^3$, with melt indices ranging from 1.0 g/10 minutes and 3.3 g/10 minutes, and are thought to contain about 4.5 mole percent octene. Further suitable ductile, malleable thermoplastic polyolefin base polymers may be amorphous high molecular weight stereoblock polypropylenes (HMWSPP) polymerised from a transition organometalic catalyst like tetraneophyll zirconium as described in US Patent No. 3,950,269.

Suitable non-limiting examples of modified thermoplastic polyolefin base polymers are: modified propylene/ethylene copolymer, impact polymer, MFI (230°C/2.16 kg): 0.6 g/10 min, available as HIFAX CA 10 A, from Montell Bayreuth GmbH, Eschborn, Germany; and modified propylene/ethylene copolymer, impact polymer, MFI (230°C/2.16 kg): 0.6 g/10 min, available as HIFAX CA 12 A, from Montell Bayreuth GmbH, Eschborn, Germany. Hifax CA 12A is less modified than HIFAX CA 10A. A further non-limiting example of a modified thermoplastic polyolefin is Novolen™ 1725 SA 205 polypropylene copolymer supplied by BASF AG, Ludwigshafen, Germany.

The amorphous polyolefin additive in accordance with the second embodiment of the present invention may also be described as an amorphous plastomer. Plastomers are generally polymers which have intermediate properties between elastomers and thermoplastic polymers. The amorphous polyolefin additive is preferably polymerised from at least one $\alpha$-olefin monomer, for example $\alpha$-olefin homo- co- or terpolymers.. Generally, the amorphous polyolefin additive should have a lower molecular weight than the ductile thermoplastic polyolefin base polymer.

The amorphous thermoplastic polyolefin additive preferably has a melt viscosity in the range 5 to 200 Pa.s at 190 ° C. A too low a melt viscosity may lead to surface bleeding and migration of the plastomer. A too high a melt viscosity may tend to increase the elasticity of the final composite. The amorphous thermoplastic polyolefin preferably has a molecular weight range of 30,000 to 100,000, more preferably 40,000 to 60,000. The amorphous thermoplastic polyolefin additive preferably has a specific density in the range 0.83 to 0.93, more preferably 0.85 to 0.9. The Shore A hardness of the amorphous thermoplastic polyolefin additive is preferably 40 to 60, more preferably 45 to 55. It is preferred if the crystallinity of the amorphous thermoplastic polyolefin as measured by DSC is less than 25% and more preferably less than 18%, and most preferably 15% or less. The lower limit of crystallinity may be given by materials which show rubber-like elastic properties, i.e. materials with which the permanent set after 20% or 50% extension becomes unacceptably high. In accordance with the present invention the lower limit of crystallinity for the amorphous polyolefin additive may be 5%. The amorphous thermoplastic polyolefin additive is preferably mechanically compatible with the ductile thermoplastic polymer base polymer and should not form separate phases in the composite. The amorphous thermoplastic polyolefin additive should preferably blend with the ductile thermoplastic polyolefin base polymer using standard mixing techniques, yielding well dispersed blends of small particle size. Preferably, the amorphous polyolefin additive and the ductile thermoplastic polyolefin base polymer may be blended together without the amorphous polyolefin additive having the tendency to bleed to the surface. The $\alpha$-olefin monomer of the amorphous polyolefin is preferably a $C_3$-$C_{20}$ $\alpha$-olefin, more preferably a $C_4$-$C_8$ $\alpha$-olefin or mixtures thereof. A terpolymer polymerised from at least one $\alpha$-olefin is preferred. A $C_2$, $C_3$, $C_4$ olefin terpolymer is particularly preferred. Suitable non-limiting examples of $\alpha$-olefin containing terpolymers are: $\alpha$-olefin terpolymer, melt viscosity (190°C): 8000 mPas, available as Vestoplast 708, from Huels AG, Marl, Germany; $\alpha$-olefin terpolymer, melt viscosity (190°C): 28000 mPas, available as Vestoplast 828, from Huels AG, Marl, Germany; $\alpha$-olefin terpolymer, melt viscosity (190°C): 110000 mPas (milli Pascal seconds), available as Vestoplast 891, from Huels AG, Marl, Germany. The amorphous component of the amorphous thermoplastic polyolefin additive may be assessed by extracting the crystalline or amorphous part of the composition using solvents, e.g. n-heptane. The amorphous part may be typically 70 to 90% of the composition.

Advantageously, in all embodiments of the present invention, non-reinforcing mineral particulate fillers, fungicides, bacteriocides, biocides, antioxidants, light stabilizers, processing aids, process oils, adhesion promoters or colouring pigments may be added. However, the blend should be essentially free of additives which adversely affect the mechanical compatibility of the components. A non-reinforcing filler serves to assist in providing conformance and other beneficial mechanical properties when in an intimate mixture with polymers without significantly increasing the elasticity or stiffness of the composite. Non-reinforcing mineral particulates do not significantly increase the tensile strength of the resulting composite relative to the bulk polymer. Suitable non-reinforcing mineral fillers may be produced from naturally existing ores or may be synthesized from other raw materials. Possible examples of sources of nonreinforcing mineral particulates are calcium carbonate, kaolin (aluminium silicate), talc, aluminium trihydrate, silica, wollastonite, mica, feldspar, barytes, calcium silicate, attapulgite. Generally, a low Moh hardness is preferred.

The preferred nonreinforcing material is calcium carbonate. Calcium carbonate is normally available in five grades: water ground, dry-ground, ultra-fine ground, precipitated and surface treated. Preferred types of calcium carbonate are $CaCO_3$ , 80% in a poly- $\alpha$-olefin containing plastomer as masterbatch, available as Omyalene G 200, from OMYA GmbH, Cologne, Germany, or $CaCO_3$ amorphous, 65% in polypropylene as masterbatch, available as Finapro PPH 7600 x 1 from Fina Chemicals, Brussels, Belgium.

Preferably the composite also includes a pigment for enhancing visual appearance. Preferred pigments are titanium dioxide, Rutil Kronos RN 40P, 55% in LD polyethylene as masterbatch, available as REMAFIN weiss, from Hoechst AG, Frankfurt, Germany or yellow pigment, 55% in LD polyethylene as masterbatch, available as ALBIS PE-Gelb A 11-035, from Albis Plastik GmbH, Hamburg, Germany.

A preferred antioxidant is 1,3,5 - Triazine - 2,4,6 (1H,3H,5H) - trione, available as Alvinox FB, from 3V SIGMA, Bergamo, Italy.

Examples

Materials for forming a conformnce layer 1 are referred to in the following tables according to the following numbers:

Ductile thermoplastic polyolefins:

1 Polypropylene homopolymer, melt flow index (MFI) (230°C/2.16 kg): 12 g/10 min, available as Finapro PPH 7060S, from Fina Chemicals, Brussels, BE.

2 Polyethylene homopolymer MFI(190°C/2.16 kg): 3 g/min, available as Finathene LDPE from Fina Chemicals, Brussels, BE.

3 Ethylene/Octene Copolymer MFI(190°C/2.16 kg): 0,7 g/10 min, available as Dowlex NG 5055 E from Dow Plastics, Duesseldorf.

4 Propylene/Ethylene, rubber modified (P-co-E / EPR), impact polymer, MFI (230°C/2.16 kg): 0.6 g/10 min, available as HIFAX CA 10 A, from Montell Bayreuth GmbH, Eschborn, Germany.

5 Propylene/Ethylene copolymer, rubber modified (P-co-E / EPR), impact polymer, MFI (230°C/2.16 kg): 0.6 g/10 min, available as HIFAX CA 12 A, from Montell Bayreuth GmbH, Eschborn, Germany. (Hifax CA 12A has less rubber than HIFAX CA 10A

6 Ethylene/octene copolymer produced using „single side" metallocene catalysts MFI (190°C/2,16 kg): 1g/ 10 min, available as Engage 8480, from DuPont Dow Elastomers, Bad Homburg, Germany.

Amorphous thermoplastic olefins additives:

7 $\alpha$-Olefin terpolymer, melt viscosity (190°C): 8000 mPas, available as Vestoplast 708, from Huels AG, Marl, Germany.

8 $\alpha$-Olefin terpolymer, melt viscosity (190°C): 28000 mPas, available as Vestoplast 828, from Huels AG, Marl, Germany.

9 $\alpha$-Olefin terpolymer, melt viscosity (190°C): 110000 mPas, available as Vestoplast 891, from Huels AG, Marl, Germany.

Other additives:

10 1,3,5 - Triazine - 2,4,6 (1H,3H,5H) - trione, an antioxidant, available as Alvinox FB, from 3V SIGMA, Bergamo, Italy.

11 Titanium dioxide, Rutil Kronos RN 40P, 55% in LD Polyethylene as Masterbatch, available as REMAFIN weiss, from Hoechst AG, Frankfurt, Germany.

12 Yellow Pigment,55% in LD Polyethylene as Masterbatch, available as ALBIS PE-Gelb A 11-035, from Albis Plastik GmbH, Hamburg, Germany.

13 $CaCO_3$, 80% in Poly- $\alpha$-olefin as Masterbatch, available as Omyalene G 200, from OMYA GmbH, Cologne, Germany.

14 $CaCO_3$ amorphous, 65% in Polypropylene as Masterbatch, available as Finapro PPH 7600 x1 from Fina Chemicals, Brussels, Belgium.

In the following examples "MD" and "CD" refer to machine direction and cross direction, respectively. The machine direction is the direction of extrusion and the cross direction is perpendicular to the machine direction across the width of the sheet. The term "pph" refers to parts per hundert of the composition by weight. The term "DTP" refers to ductile thermoplastic polyolefin and "ATP" refers to amorphous thermoplastic polyolefin additive. Chemical compositions of the sheet materials are shown in Table 1 and test results are shown in Table 2.

Comparative Examples C1 and C2

Non-cross-linked rubber based conformance layers as used to produce pavement marking tapes are described in U.S. Pat Nos. 3,935,365 (Eigenman), 5,422,162 (Passarino) and others. A typical calandered conformance layer consisting of nitrile/butadiene rubber, resins and fillers is used today to produce, for example, Scotch-Lane™ A651 or Stamark™ A340 pavement marking tapes, both supplied by Minnesota Mining and Manufacturing Co., Minnesota, USA. Comparative sample C1 is the rubber conformance layer from Scotch-Lane™ A651 with the other components of the tape stripped away. C2 is a commercial sample of Stamark™ A340 tape.

Examples 1, 2, and 3

A single screw extruder, commercially available as Model 60/45-30D from Plastik Machinenbau, Kehl, Germany with 45 mm screw diameter and a length of 30 times the diameter (1350 mm) was used to melt the polymeric mixtures and feed a slot die held at 260° C. The extruder was provided with six separate heating zones having temperatures of 205° C, 215° C, 225° C, 235° C, 245°C and 255° C, respectively, the temperature of the zones increasing in the direction of the die.

A single layer film was cast from the slot die directly onto a chilled stainless steel roll without significant draw. The single layer sheet was wound upon itself into a roll. The approximate thickness of the extruded films was 300 micron to 500 micron.

Example 1 was prepared in the manner just described and resulted in a single layer film of pure polypropylene having a thickness of approximately 350-400 microns.

The polymeric sheets of Examples 2, 3 were prepared in an identical fashion to example 1, with the exception that 30 parts of amorphous thermoplastic polyolefin additive (ATP) were fed into the extruder in addition to 70 parts of polypropylene. Sheets had a thickness of approximately 450 - 500 microns.

Examples 4, 5 and 6

Examples 4-6 were prepared in an identical fashion to those of examples 1-3 with the exception that a polyethylene homopolymer (2) was used as the DTP base polymer instead of a polypropylene.

Examples 7, 8 and 9

Examples 7, 8 and 9 were prepared as in examples 1 - 3 except that an ethylene-co-octene polymer (3) was employed as DTP base polymer. Examples 7 and 8 show considerably higher yield stress in the machine direction compared with the cross-direction. This is an indication of orientation in the machine direction which may be reduced by better control of the extrusion conditions. The values in the cross-direction or more representative of an optimised product of this type.

Examples 10, 11, and 12

Examples 10 - 12 were prepared as in examples 1 - 3 with the exception that a rubber modified ethylene-co-propylene polymer, HIFAX CA 12A, denoted as (5) under materials, was employed as DTP base polymer.

Examples 13 to 16

Examples 13 to 16 of the present invention were prepared as examples 1 - 3 with the exception that a rubber modified ethylene-co-propylene polymer, HIFAX CA 10A, denoted under materials as (4) was employed as DTP base polymer.

Examples 17 to 24

Examples 17 to 24 were extruded into sheet materials as described with reference to examples 1 - 3 with the exception that fillers and/or pigments were compounded into the polymeric mixture during extrusion. Base polymers (DTP) employed were rubber-modified propylene-ethylene copolymers (4,5) or mixtures thereof or an ethylene/octene copolymer (6).

The DTP and ATP combined are taken as 100 parts in combination and the filler and pigment given in phr (parts per hundred parts of the combined base polymers or of the base polymer when there is only one).

As a simple test a skilled person with experience in the pavement marking art can generally determine if a particular sample of a conformance layer material will exhibit the desired extension and creep recovery characteristics by simply handling the sample and probing it with a finger. By doing so the skilled person makes a complex assessment of a balance of physical properties.

Comparative samples C1 and C2 demonstrate the typical balance of properties which has been found to be suitable for conventional conformance layers 2 of tapes and sheets applied to the floor or pavement and subject to wear. Conformability of a marking sheet or layer may be assessed in several ways. Conformable sheets or layers should be able to be deformed plastically under reasonable forces in order to take the shape of the substrate, e. g. a road surface. One suitable test is to determine the force required to extend the material by 15%, and a further test is that of % permanent set after 20 and 50% extension as mentioned above under "Test methods".

Both C1 and C2 have a low yield point stress which conributes to good conformability. C1 has properties typical for tapes used for temporary purposes, e.g. on construction sites. The elongation is high and the permanent set relatively low as long term durability is less important. On the other hand C2 has higher permanent set and Shore hardness values and is typically used for permanent installations on roadways. High permanent set values are considered to provide good conformability and a high Shore hardness contributes to good wear resistance and durability.

The force to deform the conformance layer 1 in accordance with the present invention by 15% is typically less than 35 N/cm, which represents a stress of less than about 7 $N/mm^2$. A low force/cm indicates that the material does not have a large resistance to deformation and will conform better to an uneven substrate such as a road surface. The force to deform 15% is preferably less than 35, more preferably less than 25, most preferably lesss than 20 N/cm. Further, the permanent sets after 20 and 50% extensions are preferably reasonably high, i.e. preferably greater than 10 %, more preferably greater than 15% and most preferably greater than 20% permanent set (after extension to 120% of original length) and preferably 15%, more preferably 20% and most preferably 25% permanent set (after extension to 150% of original length). The yield point stress is preferably low, typically less than 10 $N/mm^2$ , more preferably less than 6 $N/mm^2$ and most preferably less than 4 $N/mm^2$ . Such a conformance layer is relatively "dead", i.e. it is malleable as would be expected of pure lead or dead soft aluminium but has the added advantage of having a very low yield stress in comparison to metals. Consistent with the properties of conformability, the conformance layer 1 is preferably a stretchable material. For example, the conformance layer is preferably capable of being stretched at least 50 % before break. It is preferred in accordance with the present invention if the extension to break of the conformance layer is considerably higher than this value in order to improve removability of the marking sheet from the pavement after use. In particular it is preferred if the extension to break is at least 350%, more preferably at least 500% and most preferably greater than 700%.

Desirable mechanical properties for conformance layer 1 have conventionally been obtained by using non-crosslinked rubber precursors loaded with inert and non-reinforcing fillers for the conformance layer 1. The disadvantges of such a system are the high manufacturing cost as high speed extrusion can not be used, as well as a relatively poor tear strength. Particularly for road intersections, a higher tear strength would be desired as markers in these areas are subject to slow speed wheel turn. The marker is subject to high shear forces under these conditions and there is a danger that the marker will rupture. One partial solution is to reduce the friction between the wheel and the support layer 12 by providing a low friction surface to layer 12 . This has the disadvantage that the marker may affect the braking of vehicles, something which is undesirable at road intersections. It would be preferred if the tear strength is at least 25, more preferably 45 and most preferably 70 N/mm without affecting the other mechanical properties of the conformance layer 1. At the same time, it is preferred if the conformance layer 1 in accordance with the present invention allows use of high speed extrusion techniques for manufacture of the marker.

In Table 3 the test results given in Table 2 have been ranked in accordance with the following method. For each test, three values are given. The first is a value which would be expected of conformance layer 1 for a pavement marking sheet in accordance with the present invention. The second value is considered to be a good value, and the third value is considered to be excellent. Any material which fails to meet one or more of the minimum requirements for the tests has been given the rating of Grade III. If a candidate material passes the minimum requirements for all of the tests, it is given the rating of Grade II. If the material passes the second (good) requirement for all of the tests, the material is rated as Grade 1. A rating of Grade III does not mean that a particular material is unsuitable for pavement markings. However, its use may be restricted to certain specific applications. For instance, example 2 has excellent permanet set and good elongation to break. This may be used as a tape in which conformability is less important but where stretch release of the tape is important.

On the other hand, those materials with a Grade 1, may be expected to perform well either as a temporary or permaent pavement or floor marking. Grade II materials may also find specific uses. For instance, examples 13, 17 and 18 are particularly preferred where high tear resistance is required while maintaining a reasonable balance of other mechanical test values.

Examples 1, 4, 7 and 10 show that ductile polyolefins available commercially generally do not match the balanced performance of existing rubber-based materials in all properties when used on their own. In general the force to extend by 15% is well above 35 N/cm.

In accordance with the present invention the performance of ductile thermoplastic polyolefins are modified by polymerisation or other methods in order to reduce crystallinity, lower yield point stress and lower force to deform by 15% without significantly reducing the tear strength and permanent set. This may be achieved in two basic ways. Firstly, the ductile thermoplastic polyolefin may itself be amorphous, e.g. the polyolefin may be polymerised in such a way as to reduce crystallinity and to increase elastomer type properties, e.g. an amorphous high molecular weight stereoblock polypropylene (HMWSPP) polymerised from a transition organometalic catalyst like tetraneophyll zirconium as described in US Patent No. 3 950 269. Alternatively, monomers may be included in the polymerisation of a coplymer, terpolymer etc. with other olefins, e.g. preferred example 13 made from Hifax CA 10A. Non-reinforcing fillers may also be introduced into these polymer compounds to optimise properties.

As a further alternative, an amorphous plastomer may be compounded with a ductile thermoplastic polyolefin base polymer in order to obtain "dead soft" malleability with good tear strength, e.g. particularly preferred example 12. Finally, the conformance layer 1 in accordance with the present invention may include a ductile thermoplastic polyolefin, an amorphous plastomer polymerised from at least one alpha-olefin monomer and a non-reinforcing filler, e.g. preferred examples 21 and 23. The addition of the non-reinforcing filler adds a further component which may be used to optimise the performance.

In accordance with the present invention, preferred examples of the conformance layer 1 may be used in a stretch release pavement marking tape. Stretch release relates to the ability of an adhesive tape to be removed by stretching the tape in the longitudinal direction. To be effective, the tape must have a significant extension to break. The high stretch of the tape delaminates the adhesive bond and thus releases the tape from the substrate to which it is attached. For stretch release properties it is preferred if the conformance layer in accordance with the present invention has an extension to break of at least 500% and more preferably of at least 700 %.

Example 25

The extruded sheet material prepared in Example 21 was incorporated into a multilayer pavement marking material by the following procedure.

The extruded sheet material was first treated on one side by corona discharge to improve adhesion to a polyurethane layer. Then, a 100% solids reactive polyurethane precursor (two part polyurethane in accordance with US Patent Application, Serial Number 08/247017) was coated on to the primed extruded sheet at a thickness of 100 micron to form a support layer 12.

A mixture of retroreflective glass beads and skid-resistant particles treated with adhesion promoter were sprinkled onto the wet polyurethane using a vibration hopper and the complete layer was cured at 130° C for 3 minutes.

The opposite surface of the extruded sheet was laminated to a 100 micron thick pre-formed layer of rubber/resin pressure-sensitive adhesive supported on a removable release liner. The rubber/resin adhesive was a polybutadiene-rubber based pressure sensitive adhesive. The final tape was of a construction similar to that shown in Fig. 2.

The pavement marking material formed in this manner was tested by applying to asphalt and concrete road surfaces. The materials in accordance with the present inevntion exhibited superior properties to state-of-the -art materials, particularly with respect to their balance of conformability and resistance to tear and punch-through. Application of these materials to surfaces at low temperatures was also found to be superior to state-of-the-art products.

Removability of pavement marking materials from a road surface using a stretch release mechanism was tested in the following way.

The strip of the pavement marking material as described having a width 15 cm, was adhered to a pavement surface by tamping with a 90 kg weight roller.

After a period of 10 days had elapsed subject to traffic, the pavement marking was removed from the road by first lifting one end of the pavement marking strip from the road surface by hand and then removing by stretching. The end of the pavement marking was peeled from the road surface and then stretched by drawing by hand at an angle of less than 45° to the road surface. The pavement marking simultaneously stretched and released adhesively from the road surface, leaving no residue, and without breaking.

The articles of the present invention may be installed in the form of tapes on a roadway or other location using any one of a variety of apparatus such as human pushable dispensers, "behind a truck" types of dispensers, and "built into a truck" type dispensers. U.S. Pat. No. 4,030,958 (Stenemann), incorporated herein by reference, discloses a suitable behind a truck type dispenser for applying the articles of the invention in the form of adhesive-backed tapes to a surface. Other means may be used to install the articles of the invention, such as simple manual application, or use of the previously mentioned mechanical fasteners.

Preferred pavement marking tapes in accordance with the present invention may be removed from the roadway, floor or pavement by a stretch release mechanism. The tape is may be stretched using a motor vehicle or a motorized winch.

TABLE 1

| Chemical composition | | | | | |
| --- | --- | --- | --- | --- | --- |
| Example | DTP, pph | ATP, pph | CaCO$_3$, phr | Pigment, phr | Antiox., phr |
| 1 | PP (1), 100 | 0 | | | |
| 2 | PP (1), 70 | (8), 30 | | | |

TABLE 1 (continued)

| Chemical composition | | | | | | |
|---|---|---|---|---|---|---|
| Example | DTP, pph | | ATP, pph | $CaCO_3$, phr | Pigment, phr | Antiox., phr |
| 3 | PP (1), 70 | | (9), 30 | | | |
| 4 | PE (2), 100 | | 0 | | | |
| 5 | PE (2), 70 | | (8), 30 | | | |
| 6 | PE (2), 70 | | (9), 30 | | | |
| 7 | PE (3), 100 | | 0 | | | |
| 8 | PE (3), 70 | | (8), 30 | | | |
| 9 | PE (3), 70 | | (9), 30 | | | |
| 10 | P-co-E (5), 100 | | 0 | | | |
| 11 | P-co-E (5), 70 | | (8), 30 | | | |
| 12 | P-co-E (5), 70 | | (9), 30 | | | |
| 13 | P-co-E (4), 100 | | 0 | | | |
| 14 | P-co-E (4), 70 | | (8), 30 | | | |
| 15 | P-co-E (4), 70 | | (9), 30 | | | |
| 16 | P-co-E (4), 50 | | (8), 50 | | | |
| 17 | P-co-E (4), 70 | | (8), 30 | (13), 43 | --- | --- |
| 18 | P-co-E (4), 60 | | (8), 40 | (13), 43 | --- | --- |
| 19 | P-co-E (5), 70 | | (8), 30 | (13), 43 | --- | --- |
| 20 | P-co-E (5), 60 | | (8), 40 | (13), 43 | --- | --- |
| 21 | P-co-E (4) 20, P-co-E (5) 45 | | (8), 35 | (13,) 43 | (12), 13, 75 | 0.2 |
| 22 | P-co-E (4), 66 | | (8), 34 | --- | (12), 10, (13) 3.0 | 0.2 |
| 23 | P-co-E (4), 66 | | (8), 34 | (14), 14 | (11), 7 | 0.2 |
| 24 | PE (6), 70 | | (8), 30 | 43 | - | - |

TABLE 2

| Physical properties. | | | | | | | | |
|---|---|---|---|---|---|---|---|---|
| sample | Yield point stress $N/mm^2$ | | Force to deform 15%, N/cm MD | Elongation at break, % MD | Set 20% MD | Set 50% MD | Tear strength N/mm CD | Shore A Hardness |
| | MD | CD | | | | | | |
| C1 A651 conformance layer only | 1.2 | | 5.5 | 490 | 20 | 28 | 13.5 | 61 |
| C2 A340 | 4 | | 17 | 150 | 52 | 69 | 19 | 81 |
| 1 | 23.5, | 23.7 | 115 | 18,5 | 35 | - | 54 | - |
| 2 | 15, | 15 | 70 | 750 | 22,5 | 40 | 36 | 95 |

TABLE 2 (continued)

| Physical properties. | | | | | | | | |
|---|---|---|---|---|---|---|---|---|
| sample | Yield point stress N/mm$^2$ | | Force to deform 15%, N/cm MD | Elongation at break, % MD | Set 20% MD | Set 50% MD | Tear strength N/mm CD | Shore A Hardness |
| | MD | CD | | | | | | |
| 3 | 18, | 17 | 82 | 780, | 35 | 42 | - | 96 |
| 4 | 8.3, | 8.2 | 40 | 830 | 5 | 8,0 | 78 | - |
| 5 | 6 | 4 | 25 | 588, | 13 | 14 | 28 | 85 |
| 6 | 5.7, | 5.1 | 25 | 670, | 8 | 12 | 93 | 88 |
| 7 | 8.5, | 5.1 | 43 | 1007, | 30 | 44 | 140 | - |
| 8 | 12, | 4 | 27 | 763, | 12 | 12 | 60 | 89 |
| 9 | 6.8, | 5.1 | 28 | >1000, | 17.5 | 14 | 78 | 87 |
| 10 | 8.4 | | 41 | 762 | 25 | 36 | 72 | - |
| 11 | 4.3, | 4.1 | 26 | 749 | 20 | 38 | 48 | 84 |
| 12 | 4.9, | 3.8 | 23 | 800, | 18 | 32 | 53 | 79 |
| 13 | 4.7, | 3.9 | 24 | 590 | 15 | 22 | 74 | 86 |
| 14 | 7.5, | 3.2 | 21 | 960 | 15 | 14 | 61 | 77 |
| 15 | 4.1, | 3.5 | 19 | 1140 | 12.5 | 17 | 68 | 80 |
| 16 | 1.7, | 2.0 | 7.5 | 540 | 19 | 20 | 50 | 66 |
| 17 | 3.8, | 3.2 | 17,5 | 760 | 10 | 18 | 72 | 84 |
| 18 | 3.3, | 3.0 | 15.0 | 760 | 12 | 18 | 71 | 83 |
| 19 | 4.4, | 3.6 | 21.5 | 50 | 32 | 48, | 26 | 84 |
| 20 | 4.2, | 3.4 | 21.0 | 100 | 26 | - | 11 | 86 |
| 21 | 3.1, | 3.8 | 15 | 1200 | 20 | 38 | 48 | 87 |
| 22 | 3.0, | 3.1 | 15 | 650 | 12 | 21 | 40 | 83 |
| 23 | 4.3, | 3.5 | 22 | 710 | 15 | 20 | 48 | 81 |
| 24 | 3.2 | | 14 | 740 | 5 | 7 | 73 | 84 |

## Table 3

| Sample number | yield point stress N/mm² | | | Force to deform 15% N/cm | | | Elongation to break % | | | Permanent set after 20% extension % | | | Permanent set after 50% extension % | | | Tear strength in N/mm² | | | Shore A hardness | | | Rank |
|---|---|---|---|---|---|---|---|---|---|---|---|---|---|---|---|---|---|---|---|---|---|---|
| | ≤10 | ≤6 | ≤4 | ≤35 | ≤25 | ≤20 | ≥50 | ≥500 | ≥700 | ≥10 | ≥15 | ≥20 | ≥15 | ≥20 | ≥25 | ≥25 | ≥45 | ≥70 | ≥65 | ≥75 | ≥85 | |
| C1 | P | P | P | P | P | P | P | F | F | P | P | P | P | P | P | F | F | F | F | F | F | III |
| C2 | P | P | P | P | P | P | P | F | F | P | P | P | P | P | P | P | P | F | P | P | F | I |
| 2 | F | F | F | F | F | F | P | P | P | P | P | P | P | P | P | P | F | F | P | P | P | III |
| 3 | F | F | F | F | F | F | P | P | P | P | P | P | P | P | P | ? | ? | ? | P | P | P | III |
| 5 | P | P | F | P | P | F | P | P | F | P | F | F | F | F | F | P | F | F | P | P | P | III |
| 6 | P | P | F | P | P | F | P | P | F | F | F | F | F | F | F | P | P | P | P | P | P | III |
| 8 | ?P | F | F | P | F | F | P | P | P | P | F | F | F | F | F | P | P | F | P | P | P | III |
| 9 | P | F | F | P | F | F | P | P | P | P | P | F | F | F | F | P | P | P | P | P | P | III |
| 10 | P | F | F | F | F | F | P | P | P | P | P | P | P | P | P | P | P | P | - | - | - | III |
| 11 | P | P | F | P | F | F | P | P | P | P | P | P | P | P | P | P | P | P | P | P | F | II |
| 12 | P | P | F | P | P | F | P | P | P | P | P | F | P | P | P | P | P | F | P | P | F | I |
| 13 | P | P | F | P | P | F | P | P | F | P | P | F | P | P | F | P | P | F | P | P | P | I |
| 14 | P | F | F | P | P | F | P | P | F | P | P | F | F | F | F | P | P | F | P | P | F | III |
| 15 | P | P | P | P | P | P | P | P | P | P | F | F | P | F | F | P | P | F | P | P | F | II |
| 16 | P | P | P | P | P | P | P | P | F | P | P | F | P | P | F | P | P | F | P | F | F | II |
| 17 | P | P | P | P | P | P | P | P | P | P | F | F | P | F | F | P | P | P | P | P | F | II |
| 18 | P | P | P | P | P | P | P | P | P | P | F | F | P | F | F | P | P | P | P | P | F | II |
| 19 | P | P | F | P | P | F | P | F | F | P | P | P | P | P | P | P | F | F | P | P | F | II |
| 20 | P | P | F | P | P | F | P | F | F | P | P | P | ? | ? | ? | F | F | F | P | P | P | III |
| 21 | P | P | P | P | P | P | P | P | P | P | P | P | P | P | P | P | P | F | P | P | P | I |
| 22 | P | P | P | P | P | P | P | P | F | P | F | F | P | P | F | P | F | F | P | P | F | II |
| 23 | P | P | F | P | P | F | P | P | P | P | P | F | P | P | F | P | P | F | P | P | F | I |
| 24 | P | P | P | P | P | P | P | P | P | F | F | F | F | F | F | P | P | P | P | P | F | III |

p = met value required     f = did not meet value required

EP 0 850 755 A1

Claims

1. A conformable marking sheet having a conformance layer, said conformance layer comprising a composition including a ductile thermoplastic polyolefin and segments of an amorphous polyolefin.

2. A conformable marking sheet in accordance with claim 1, wherein said composition includes a ductile thermoplastic polyolefin modified with an amorphous polyolefin rubber.

3. A conformable marking sheet in accordance with claim 1 or 2, wherein in said composition, said ductile thermoplastic polyolefin is 50 to 90 % by weight of a ductile thermoplastic polyolefin base polymer and said amorphous polyolefin segments are 10 to 50 % by weight of an amorphous thermoplastic polyolefin additive.

4. A conformable marking sheet in accordance with claim 1, 2 or 3, wherein said ductile thermoplastic polyolefin is chosen from the group including polyethylene, polypropylene and copolymers of these materials as well as co- or terpolymer containing α-olefins and homoplymer/copolymer/terpolymer mixtures.

5. A conformable marking sheet in accordance with claim 3 or 4, wherein said composition has a crystallinity of 25% or less and preferably 18% or less and most preferably 15% or less.

6. A conformable marking sheet in accordance with claim 3, 4 or 5, wherein said amorphous thermoplastic polyolefin additive is polymerised from at least one α-olefin monomer and has a melt viscosity at 190° C in the range 500 to 200,000 mPas, said ductile thermoplastic polyolefin base polymer has a melt viscosity at 190° C of at least 1,000,000 mPas, and said amorphous thermoplastic polyolefin additive is mechanically compatible with said ductile thermoplastic polyolefin base polymer.

7. A conformable marking sheet in accordance with any of the preceding claims, wherein the crystallinity of said ductile thermoplastic polyolefin is less than 60%, preferably less than 35%, more preferably less than 25% and most preferably less than 18%.

8. A conformable marking sheet in accordance with any of the preceding claims, wherein the crystallinity of said amorphous polyolefin is 25% or less and preferably 18% or less and most preferably 15% or less.

9. A conformable marking sheet according to any of the previous claims wherein, said conformance layer includes from 15 to 50% by weight of a non-reinforcing mineral particulate filler.

10. A conformable marking sheet in accordance with any of the previous claims, wherein the force to extend said conformance layer by 15% is preferably at most 35, more preferably at most 25 and most preferably at most 20 N/cm.

11. A conformable marking sheet in accordance with any of the previous claims, wherein the yield point stress of said conformance layer is preferably at most 10, more preferably at most 6 and most preferably at most 4 N/mm$^2$.

12. A conformable marking sheet in accordance with any of the previous claims, wherein the permanent set after extension to 120 % of the original length of said conformance layer is preferably at least 10, more preferably at least 15 and most preferably at least 20%.

13. A conformable marking sheet in accordance with any of the previous claims, wherein the tear strength of said conformance layer is preferably at least 25, more preferably at least 45 and most preferably at least 70 N/mm$^2$.

14. A conformable marking sheet in accordance with any of the previous claims, wherein the permanent set after extension to 150 % of the original length of said conformance layer is preferably at least 15, more preferably at least 20 and most preferably at least 25%.

15. A conformable marking sheet in accordance with any of the previous claims, wherein the elongation to break of said conformance layer is preferably at least 50, more preferably at least 500 and most preferably at least 700 %.

16. A conformable marking sheet in accordance with any of the previous claims, wherein the Shore A hardness of said conformance layer is preferably at least 65, more preferably at least 75 and most preferably at least 85.

**17.** A conformable marking sheet in accordance with any of the previous claims, wherein said conformance layer has a thickness preferably between 150 and 3000 micron.

**18.** A stretch release conformable pavement marking sheet.

**19.** A conformable marking sheet having a conformance layer, said conformance layer comprising:

at least 10% by weight of an amorphous thermoplastic polyolefin.

FIG. 1

FIG. 2

FiG. 3

FiG. 4.

**European Patent Office**

## EUROPEAN SEARCH REPORT

Application Number

EP 96 20 3681

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 194 113 A (LASCH JAMES E ET AL) 16 March 1993<br>* column 2, line 38 - column 3, line 39 *<br>--- | 1 | B32B27/08<br>E01F9/04 |
| A | DATABASE WPI<br>Section Ch, Week 9551<br>Derwent Publications Ltd., London, GB;<br>Class A17, AN 95-400308<br>XP002030987<br>& JP 07 276 584 A (UBE IND LTD) , 24 October 1995<br>* abstract *<br>--- | 1 | |
| A | US 5 437 907 A (PEIL FRED G ET AL) 1 August 1995<br>* claims *<br>--- | 1 | |
| A | WO 96 06982 A (MINNESOTA MINING & MFG) 7 March 1996<br>* claims; figures *<br>--- | 1 | |
| A | WO 96 16231 A (MINNESOTA MINING & MFG) 30 May 1996<br>* claims; figures *<br>--- | 1 | TECHNICAL FIELDS SEARCHED (Int.Cl.6)<br><br>E01F |
| A | US 5 507 464 A (HAMERSKI MICHAEL D ET AL) 16 April 1996<br>* claims; figures *<br>----- | 18 | |

The present search report has been drawn up for all claims

| Place of search | Date of completion of the search | Examiner |
|---|---|---|
| THE HAGUE | 15 May 1997 | De Jonge, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)